# EUROPEAN PATENT APPLICATION

(11) **EP 4 167 118 A1**
(43) Date of publication of application: **19.04.2023**
(21) Application number: 21203285.8
(22) Date of filing: 18.10.2021
(51) Int. Cl.: G06F 21/64, H04L 9/06, H04L 9/32, H04W 12/106

(54) **METHOD FOR CONTROLLING A TRANSMISSION OF A MESSAGE FROM A SOURCE APPLICATION TO A TARGET APPLICATION**

(71) Applicant: Valeo Comfort and Driving Assistance, 94000 Créteil (FR)
(72) Inventor: JOUSSE, Adrien, 94000 Créteil (FR); VENELLE, Benjamin, 94000 Créteil (FR); PITCHAIMANI, Ramakrishnan, 94000 Créteil (FR)
(74) Representative: Delaval, Guillaume Laurent

(57) **Abstract**

The invention relates to a method (1) for controlling a transmission of a message (Msg) from a source application (A_S) within a primary electronic control unit (ECUA) of a network (N) to a target application (A_T) within a secondary electronic control unit (ECUB) of said network (N) according to a communication protocol (P), said method (1) comprising:
- building (E1) by the source application (A_S) a message (Msg),
- associating (E2) to said message (Msg) security information (si) characterizing said source application (A_S),
- forwarding (E3) said security information (si) to at least one access control module (Acm) of one of the two primary and secondary electronic control units (ECUA, ECUB) via applicative layers (L5-L7) of at least one of network protocol stack (St) of one of the two primary and secondary electronic control units (ECUA, ECUB),
- checking (E4) by said at least one access control module (Acm) access rules (r) mapped to said security information (si),
- based on said checking, sending back (E5) by said access control module (Acm) a security decision (b) for the message (Msg) to said applicative layers (L5-L7) of said at least one network protocol stack (St).

## Description

### FIELD OF THE INVENTION

The present invention relates to a method for controlling a transmission of a message from a source application to a target application. Such a method may be used, but not exclusively, in a vehicle.

### BACKGROUND OF THE INVENTION

Nowadays, an automotive network of a vehicle comprises about 100 to 150 interconnected electronic control units, each of them comprising one or a plurality of applications. Each application offers some services to others requestable by a corresponding message. When a target application of a primary electronic control unit receives a message, for example a read/write request, from a source application of a secondary electronic control unit, the target application is not able to identify the origin of the message and will allow the read/write request even if the source application has no rights to read/write some data within the target application. One solution is to perform an authentication assessing the identity of the source application. Each time the source application sends a message to the target application, it has to authenticate itself to the target application.

One problem of this prior art is that with the authentication solution, every and single application shall have its own cryptographic materials (such as symmetric or asymmetric keys) required to prove its identity to others and therefore to communicate with other applications, and shall have access to those of other applications to perform the required cryptographic calculus. This leads to a situation where each application spends much computational time and resources (huge memory consumption, high CPU computation cost) on cryptographic functions instead on the features that it should serve.

It is an object of the invention to provide a method for controlling a transmission of a message from a source application to a target application, which resolves the problem above-stated.

### SUMMARY OF THE INVENTION

To this end, it is provided a method for controlling a transmission of a message from a source application to a target application within a primary electronic control unit of a network to a target application within a secondary electronic control unit of said network according to a communication protocol, said method comprising:
- building by the source application a message,
- associating to said message security information characterizing said source application,
- forwarding said security information to at least one access control module of one of the two primary and secondary electronic control units via applicative layers of at least one of network protocol stack of one of the two primary and secondary electronic control units,
- checking by said at least one access control module access rules mapped to said security information,
- based on said checking, sending back by said access control module a security decision for the message to said applicative layers of said at least one network protocol stack.

"Associating" means that security information characterizing said source application are assigned to said message.

As we will see in further details, thanks to the exchange of the security information from the source application to the target application, the method permits to enforce access clearance on a message and thus discriminates the messages coming from a source application from other messages coming from another source application. The security information are transmitted with the message sent, and access rules are stored in a memory of the target application. Thus, the memory used is smaller than the memory used in the prior art for storing the cryptographic materials.

According to non-limitative embodiments of the invention, the method for controlling a transmission of a message from a source application to a target application in accordance with the invention further comprises the following characteristics.

In a non-limitative embodiment, said message comprises a header, a payload, and said header comprises the security information.

In a non-limitative embodiment, said message comprises a header, a payload, and said payload comprises the security information.

In a non-limitative embodiment, said message comprises a header, a payload and a footer, and said footer comprises the security information.

In a non-limitative embodiment, the footer further comprises an identification code to identify the footer and a version to define the security information's structure.

In a non-limitative embodiment, the association of said security information to said message is performed at the source application side or at the target application side.

In a non-limitative embodiment, the security information comprises a dedicated label or a default label.

In a non-limitative embodiment, the association of said security information to said message is performed at the target application side, the security information comprising said default label.

In a non-limitative embodiment, the security information further comprises a MAC.

In a non-limitative embodiment, the forwarding of said security information through the applicative layers of the at least one network protocol stack and all the following steps are performed at the source application side, and the method further comprises the transmission of said message to said target application if the security decision is positive.

In a non-limitative embodiment, the method further comprises the transmission of said message to said target application, and the forwarding of said security information through the applicative layers of the at least one network protocol stack and all the following steps are performed at the target application side.

In a non-limitative embodiment,
- said method further comprises the transmission of said message to said target application, and
- a forwarding of said security information through the applicative layers of the network protocol stack of said primary electronic control unit and all the following steps are performed at the source application side, and
- a forwarding of said security information through the applicative layers of the network protocol stack of said secondary electronic control unit and all the following steps are performed at the target application side, and the transmission of the message to said target application is performed after the forwarding of the security information at the source application side and before the forwarding of the security information at the target application side.

In a non-limitative embodiment, the network is an automotive network.

In a non-limitative embodiment, the communication protocol is a SOME/IP protocol or DDS protocol.

There is also provided a network for controlling a transmission of a message from a source application within a primary electronic control unit of a network to a target application within a secondary electronic control unit of said network according to a communication protocol:
(a)- said source application being configured to build a message,
(b)- said source application or said target application being configured to associate to said message security information characterizing said source application,
(c)- at least one of network protocol stack of one of the two primary and secondary electronic control units via its applicative layers being configured to forward said security information to at least one access control module of one of the two primary and secondary electronic control units,
(d)- said at least one access control module being configured to:
   - check access rules mapped to said security information,
   - based on said checking, send back a security decision for the message to said applicative layers of said at least one network protocol stack.

### BRIEF DESCRIPTION OF THE DRAWINGS

Some embodiments of methods and/or system in accordance with embodiments of the present invention are now described, by way of example only, and with reference to the accompanying drawings, in which:
- Figure 1 is a schematic diagram which illustrates a method for controlling a transmission of a message from a source application of a primary electronic control unit to a target application of a secondary electronic control unit, according to a non-limitative embodiment of the invention,
- Figure 2 is a schematic view of an automotive network that is configured to carry out the method of figure 1, said automotive network comprising a plurality of electronic control units with one or a plurality of applications and with a network protocol stack composed of different communication layers used for the communication between the different electronic control units, according to a non-limitative embodiment,
- Figure 3 is a schematic diagram of the structure of a message transmitted by the method of figure 1, said message comprising a header, and a payload according to a first non-limitative embodiment,
- Figure 4 is a schematic diagram of the structure of a message transmitted by the method of figure 1, said message comprising a header, and a payload according to a second non-limitative embodiment,
- Figure 5 is a schematic diagram of the structure of a message transmitted by the method of figure 1, said message comprising a header, a payload and a footer according to a third non-limitative embodiment,
- Figure 6 is a schematic view of a primary electronic control unit of the automotive network of figure 2, said primary electronic control unit comprising a source application, the controlling of a transmission of a message coming from said source application being embedded on said primary electronic control unit, according to a first non-limitative embodiment,
- Figure 7 is a schematic view of a secondary electronic control unit of the automotive network of figure 2, said secondary electronic control unit comprising a target application, the controlling of a transmission of a message coming from a source application being embedded on said secondary electronic control unit, according to a second non-limitative embodiment,
- Figure 8 is a schematic diagram which illustrates the method of figure 1, according to a first non-limitative embodiment,
- Figure 9 is a schematic view of a local communication between a source application and a target application within a same electronic control unit of the automotive network of figure 2, said electronic control unit being configured to carry out the method of figure 8, according to a first non-limitative embodiment,
- Figure 10 is a schematic diagram which illustrates the method of figure 1, according to a first non-limitative variant of a second non-limitative embodiment,
- Figure 11 is a schematic view of a communication between a source application and a target application within two different electronic control units of the automotive network of figure 2, said two different electronic control units being configured to carry out the method of figure 10, and wherein the controlling of a transmission of a message coming from said source application of a primary electronic control unit is embedded on said primary electronic control unit, according to a first non-limitative variant of a second non-limitative embodiment,
- Figure 12 is a schematic diagram which illustrates the method of figure 1, according to a first non-limitative embodiment of a second non-limitative variant of a second non-limitative embodiment,
- Figure 13 is a schematic view of a communication between a source application and a target application within two different electronic control units of the automotive network of figure 2, said two different electronic control units being configured to carry out the method of figure 12, and wherein the controlling of a transmission of a message coming from said source application of a primary electronic control unit is embedded on said secondary electronic control unit, according to a first non-limitative of embodiment of a second non-limitative variant of a second non-limitative embodiment,
- Figure 14 is a schematic diagram which illustrates the method of figure 1, according to a second non-limitative embodiment of a second non-limitative variant of a second non-limitative embodiment,

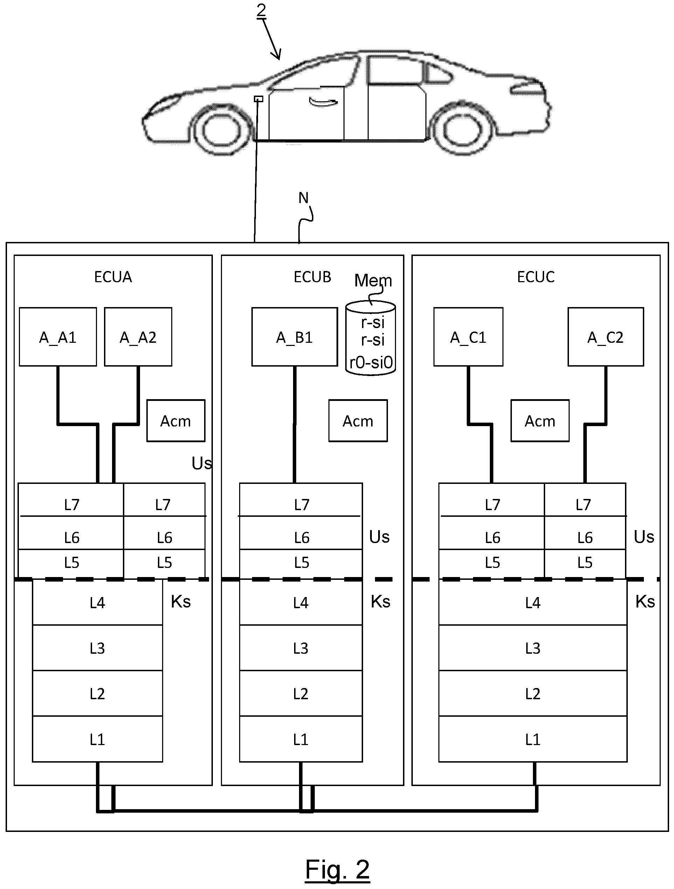

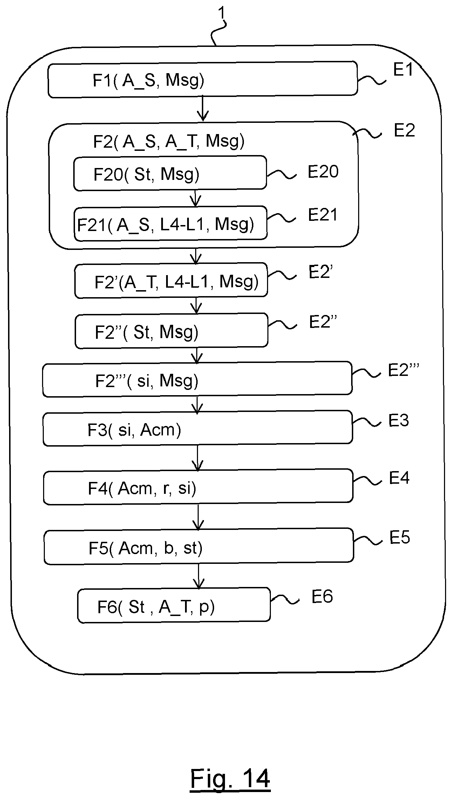

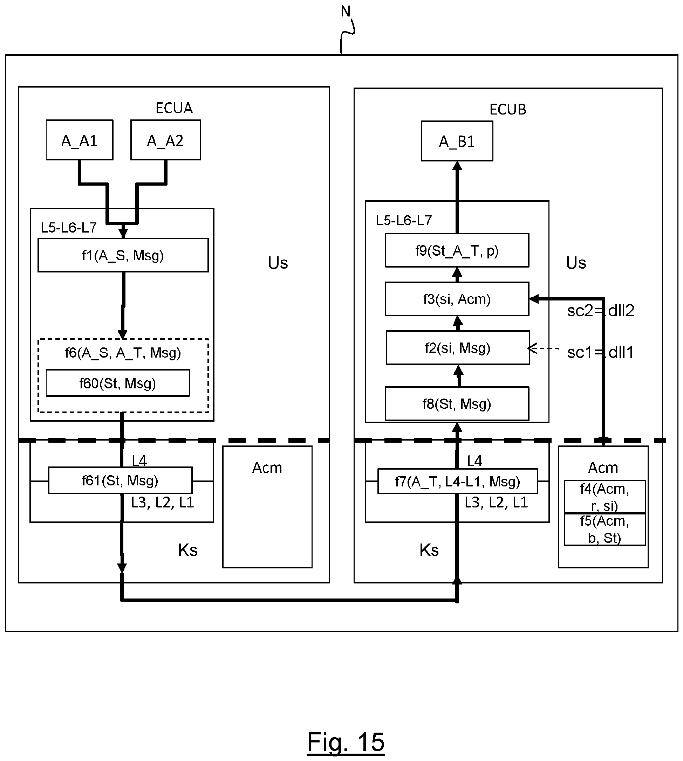

- Figure 15 is a schematic view of a communication between a source application and a target application within two different electronic control units of the automotive network of figure 2, said two different electronic control units being configured to carry out the method of figure 14, wherein the controlling of a transmission of a message coming from said source application of a primary electronic control unit is embedded on said secondary electronic control unit, according to a second non-limitative variant of embodiment of a second non-limitative variant of a second non-limitative embodiment,
- Figure 16 is a schematic diagram which illustrates the method of figure 1, according to a third non-limitative variant of a second non-limitative embodiment,

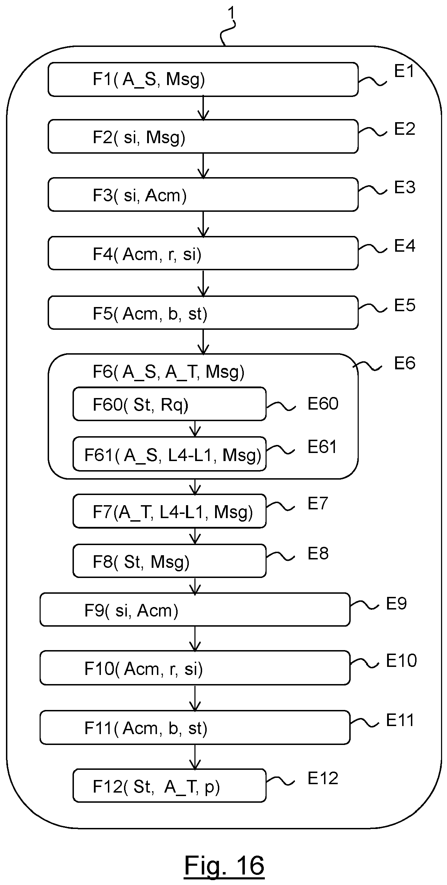

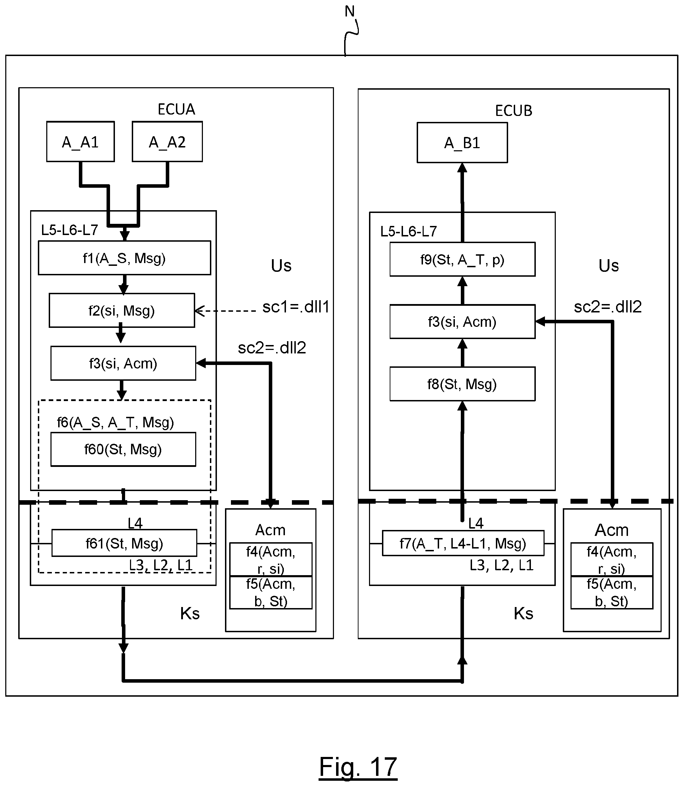

- Figure 17 is a schematic view of a communication between a source application and a target application within two different electronic control units of the automotive network of figure 2, said two different electronic control units being configured to carry out the method of figure 16, and wherein the controlling of a transmission of a message coming from said source application of a primary electronic control unit is embedded on said primary electronic control unit and on said secondary electronic control unit, according to a third non-limitative variant of a second non-limitative embodiment.

### DESCRIPTION OF EMBODIMENTS OF THE INVENTION

In the following description, well-known functions or constructions by the man skilled in the art are not described in detail since they would obscure the invention in unnecessary detail.

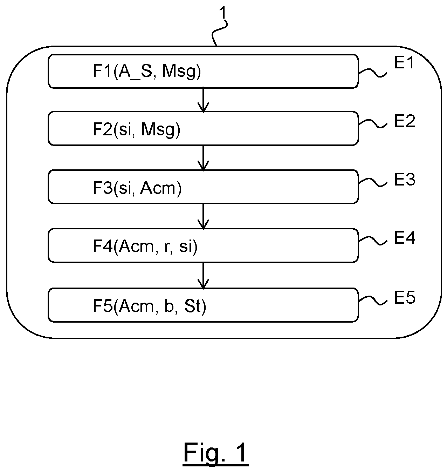

The present invention relates to a method 1 for controlling a transmission of a message Msg from a source application A_S within a primary electronic control unit ECUA of a network N to a target application A_T within a secondary electronic control unit ECUB of the network N according to a communication protocol P. Said method 1 is described in reference to figures 1, 8, 10, 12, 14 and 16, according to non-limitative embodiments.

In a non-limitative embodiment, a message Msg is a request to access some data or a service of the target application A_T, or is a response to a request of the target application A_T.

In a non-limitative embodiment, the network N is an automotive network of a vehicle 2 as illustrated in figure 2. This non-limitative embodiment is taken as a non-limitative example in the following. In non-limitative examples, the automotive network N is an Ethernet network, a MOST "Media Oriented System Transport" network, a Flexray network, or any other type of automotive network N. The automotive network N comprises a plurality of electronic control units ECU. In figure 2, three electronic control units ECUA, ECUB and ECUC have been illustrated. Each electronic control unit ECU comprises one or a plurality of applications A and is configured to run them. In the non-limitative example of figure 2, a primary electronic control unit ECUA comprises two applications A_A1 and A_A2, a secondary electronic control unit ECUB comprises one application A_B1 and a tertiary electronic control unit ECUC comprises two applications A_C1, A_C2.

It is to be noted that usually, an automotive network N comprises about 100 to 150 electronic control units ECU.

Some security information si are associated to each application A. These security information si are either some dedicated security information si, either some default security information si0. By "associated", one means that some security information si are assigned to each application A.

In a non-limitative embodiment, access rules r are mapped to the security information si associated to an application A. In non-limitative examples, access rules r are read and/or write and/or modify. In a non-limitative embodiment, the access rules r are stored in a memory Mem within each electronic control unit ECU of the network N that controls the messages Msg of a corresponding application A. Thus, the memory Mem comprises a mapping between the access rules r and the security information si for each application A of which message Msg which transmission has to be controlled by an electronic control unit ECU. In the non-limitative example of figure 2, the secondary electronic control unit ECUB controls the transmission of the messages Msg of the two applications A_A1 and A_A2. Therefore, its memory Mem stores a mapping of the access rules r and the security information si associated to applications A_A1 and A_A2. In the non-limitative example of figure 2, it stores two mappings r-si.

It is to be noted that if the default security information si0 are used, some default access rules r0 are mapped to said default security information si0. In a non-limitative embodiment, the default access rules r0 are deny read and write and modify, or deny write and modify but allow read. The use of the default security information si0 is described later in the following.

In a non-limitative embodiment, the communication protocol P is built on the OSI model based on communication layers going from 1 to 7, also called layers, and referred to as L1 to L7, of which the media layers L1 to L3 and the host layers L4 to L7, with L1 the physical layer, L2 the data link layer, L3 the network layer, L4 the transport layer, L5 the session layer, L6 the presentation layer, and L7 the application layer. The lower layers L1 to L4 (L1-L4) belong to a kernel space Ks and the upper layers L5 to L7 (L5-L7) belong to a user space Us. The layers L1 to L7 are collectively referred to as the network protocol stack St or protocol stack St. The layers L5 to L7 are collectively referred to as the applicative layers L5-L7.

In a non-limitative embodiment, the communication protocol P is a SOME/IP ("Scalable service-Oriented Middleware over IP") protocol or a DDS ("Data Distribution Service") protocol.

The automotive network N comprises a plurality access control modules Acm.

An access control module Acm is embedded within an electronic control unit ECU. In a non-limitative embodiment, an access control module Acm is a SMACK, SEL inux access control module.

An access control module Acm is in the kernel space Ks. It is configured to control the messages Msg of the applications A that are within the user space US. An access control module Acm gives access or forbids access to the message Msg.

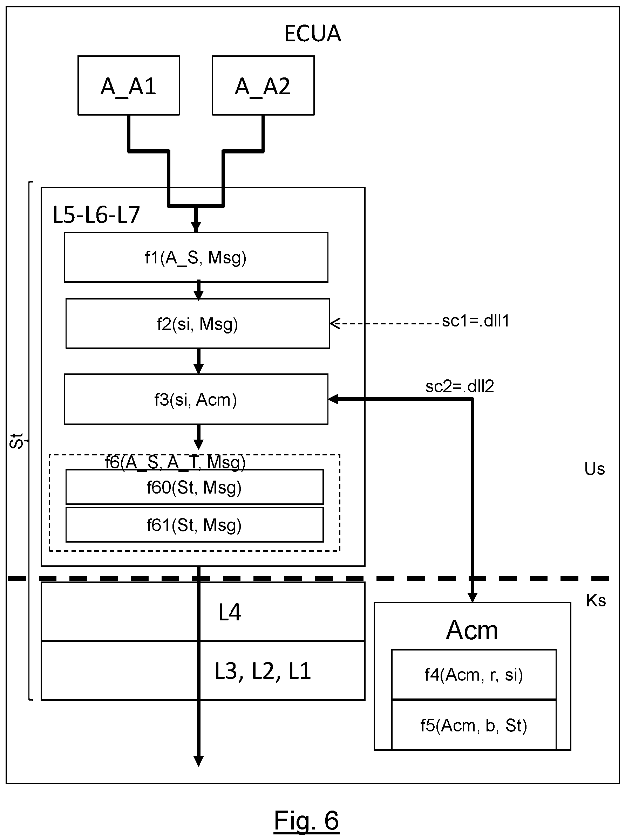

In a first non-limitative embodiment, the automotive network N comprises one access control module Acm that is embedded on the sender side, that is to say within the electronic control unit ECU that hosts the source application A_S that sends a message Msg. Hence, as illustrated in figure 6, the access control module Acm is embedded in the primary electronic control unit ECUA that hosts the source applications A_A1 and A_A2 that are configured to send messages Msg to a target application A_T.

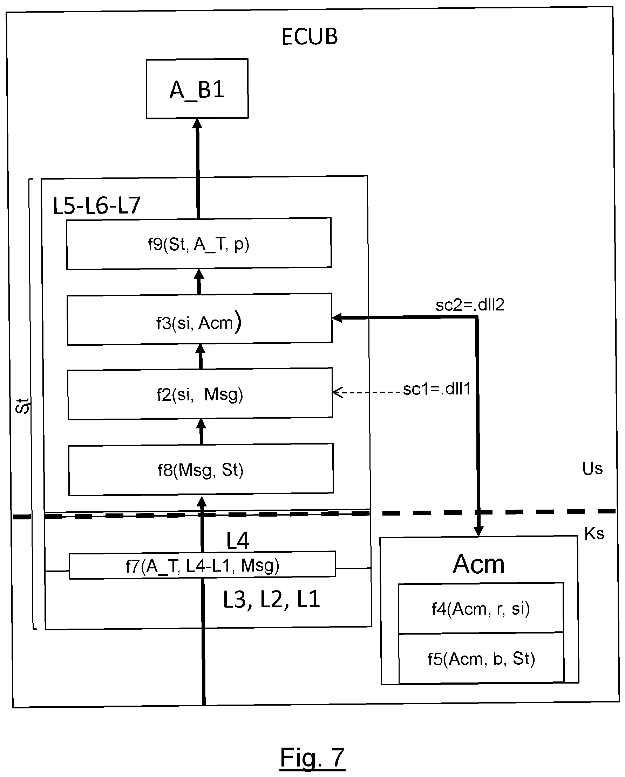

In a second non-limitative embodiment, the automotive network N comprises one access control module Acm that is embedded in the receiver side, that is to say within the electronic control unit ECU that receives the message Msg sent by the source application A_S. Hence, as illustrated in figure 7, the access control module Acm is embedded in the secondary electronic control unit ECUB that hosts the target application A_B1 that is configured to receive the message Msg.

In a third non-limitative embodiment, the automotive network N comprises two access control modules Acm of which one access control module Acm embedded in the sender side and one access control module Acm embedded in the receiver side.

In a first non-limitative embodiment, an access control module Acm is configured to control local messages Msg coming from local applications A that are hosted by an electronic control unit ECU that is the same as the one where it is embedded.

In a second non-limitative embodiment, an access control module Acm is configured to control distant messages Msg coming from distant applications A that are hosted by an electronic control unit ECU that is different from the one where it is embedded.

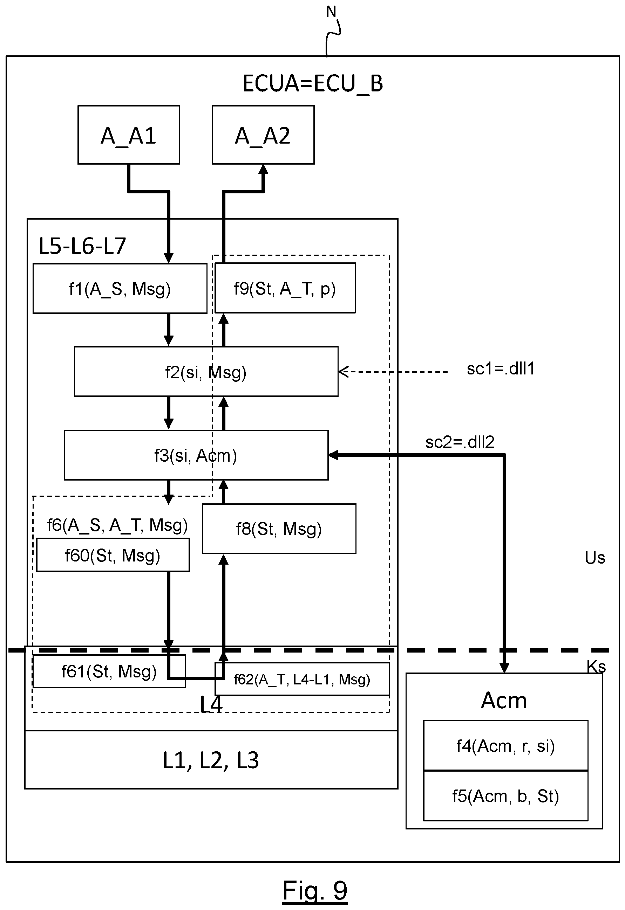

As illustrated in figure 9, in a first non-limitative embodiment, the primary electronic control unit ECUA that hosts the source application A_S and the secondary electronic control unit ECUB that hosts the target application A_T are a same electronic control unit. Therefore, the source application A_S and the target application A_T are hosted by a same electronic control unit ECU. In the non-limitative example illustrated, the source application A_S is referred to as A_A1 and the target application A_T is referred to as A_A2.

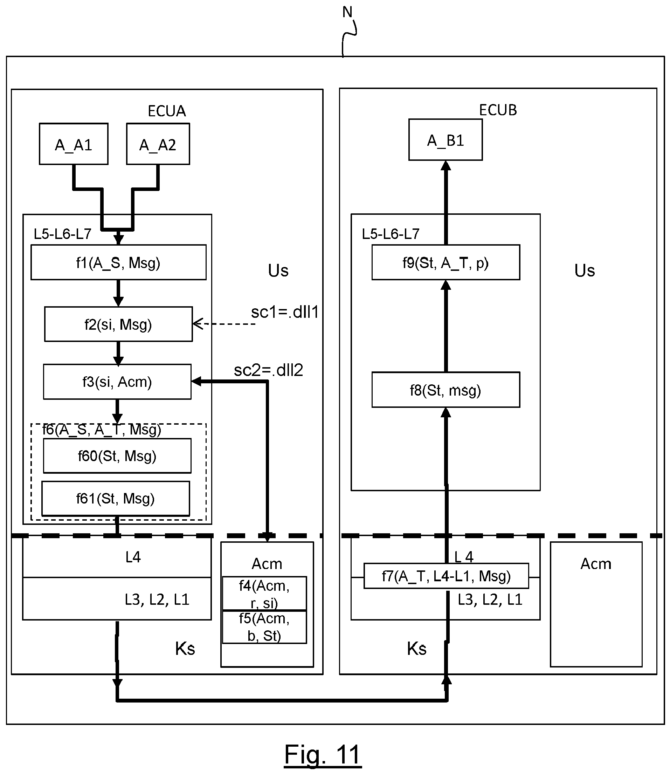

As illustrated in figures 11, 13, 15 and 17, in a second non-limitative embodiment, the primary electronic control unit ECUA that hosts the source application A_S and the secondary electronic control unit ECUB that hosts the target application A_T are different. They are distinct. Therefore, the source application A_S and the target application A_T are hosted by two different electronic control units ECU. In the non-limitative examples of figures 11, 13, 15 and 17, there are two source applications A_S referred to as A_A1 and A_A2 within the primary electronic control unit ECUA and there is one target application A_T is referred to as A_B1 within the secondary electronic control unit ECUB.

As illustrated in figure 1, the method 1 for controlling a transmission of a transmission of a message Msg from a source application A_S within a primary electronic control unit ECUA of a network N to a target application A_T within a secondary electronic control unit ECUB of said network N comprises the following steps.

**In step E1** illustrated F1(A_S, Msg(si)) in figure 1, the source application A_S through the primary electronic control unit ECUA builds a message Msg.

In non-limitative embodiments, the message Msg is a SOME/IP message or a DDS message.

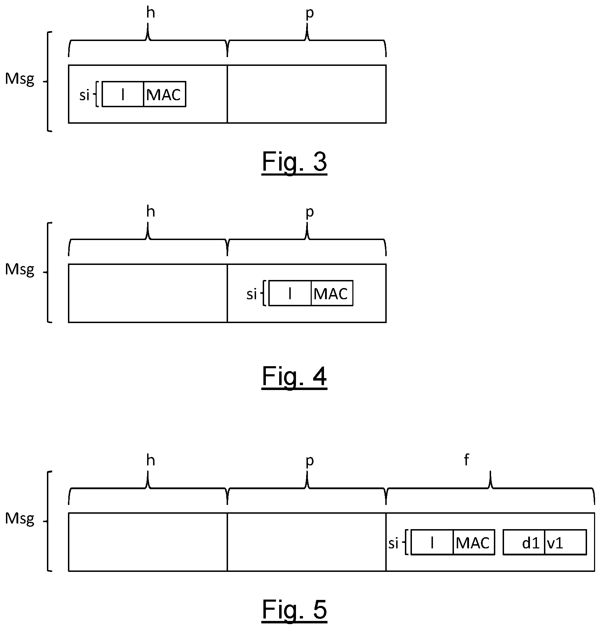

As illustrated in figures 3 to 5, in a non-limitative embodiment, the message Msg comprises:
- a header h,
- a payload p.

In a non-limitative embodiment, the header h is coded on 128bits. In a non-limitative embodiment, the length of the payload p is indicated in the header h.

In a non-limitative embodiment, the message Msg further comprises a footer f. The footer f comprises additional information set up after the payload p.

**In step E2** illustrated F2(si, Msg) in figure 1, security information si characterizing the source application A_S are associated to said message Msg.

As illustrated in figures 3 to 5, in a non-limitative embodiment, the security information si comprise at least a label I.

A label I is a security data that allows the identification of an application A. It informs from which source application A the message Msg comes from in order to tell if it is a legitimate message Msg. Thus, by identifying the source of the message Msg, the target application A_T knows if the message Msg can be consumed by checking some corresponding access rules r described later in the following.

In a non-limitative embodiment, the security information si are mapped to the source application A_S thanks to a call to software component sc1. Thus, the label I is mapped to the source application A_S with the help of the software component sc1. In a non-limitative embodiment, the software component sc1 is a library. In a non-limitative embodiment, the library is a .dll file referred to as .dll1 in the figures 6, 7, 9, 11, 13, and 16. In a non-limitative example, the library .dll1 is a SOME/IP dll.

As illustrated in figures 3 to 5, in a non-limitative embodiment, the security information si further comprise a MAC ("Message authentication code"). The MAC allows an authentication of the message Msg. It permits to confirm that it comes from the source application A_S and that it has not been modified by a malevolent third party.

In a first non-limitative embodiment, the association of the security information si with the message Msg is performed at the source application side A_S.

Hence, as illustrated in figure 6, when the source application A_S builds a message Msg (function illustrated f1(A_S, Msg), it calls a software component sc1, and said software component sc1 maps the corresponding security information si to the source application A_S (function f2(si, Msg)). In this case, the security information si are dedicated security information si that comprise a dedicated label I defined for source application A_S.

Consequently to the mapping, the security information si are embedded within the message Msg of the source application A_S. This is performed by the software component sc1.

The security information si are embedded within said message Msg according to three different non-limitative embodiments described below. When the association of the security information si with the message Msg is performed, the association is performed by inserting the security information si inside the message Msg, either in the header h, in the payload p, or in the footer f as described hereinafter.

As illustrated in figure 3, in a first non-limitative embodiment, the header h of the message Msg comprises the security information si. The security information si are therefore encapsulated within the header h. Hence, the label I is transmitted via the header h. It permits discrimination between messages Msg of different source applications A_S, as with the label I the target application A_T knows from which source application A_S the message Msg comes from. Furthermore, it permits to communicate the labels I and to use them without the involvement of the developers of an application A. It avoids developers of a source application A_S to code the label I. But, it doesn't save the compatibility with all the communication protocols used between the electronic control units ECU of a network N as the header h is modified. And, there is a hardcoding of the structure of the header h within the electronic control units ECU of the network N as the length of the header has to be modified within all the electronic control units ECU of the network N for all the ECU with which one wants to communicate.

As illustrated in figure 4, in a second non-limitative embodiment, the payload p comprises the security information si. The security information si are therefore encapsulated within the payload p. It permits discrimination between messages Msg of different source applications A_S, as with the label I the target application A_T knows from which source application A_S the message Msg comes from. Furthermore, it permits to save the compatibility with all the communication protocols used between the electronic control units ECU of a network N as the header h is not modified. Thus, it doesn't disturb the communication between different applications A that use different communication protocols. But, the developers of the source application A_S have to code the label I within said payload p, and all the existing applications A have to be modified in order to take into account the management of the labels I within the payload p. It is to be noted that the message Msg of figure 3 and figure 4 does not comprise any footer f. The footer f only exists in message Msg of figure 5 as it comprises additional information set up after the payload p.

Hence, as illustrated in figure 5, in a third non-limitative embodiment, the footer f comprises the security information si. The security information si are therefore encapsulated within the footer f. It permits discrimination between messages Msg of different source applications A_S, as with the label I the target application A_T knows from which source application A_S the message Msg comes from. It avoids developers of a source application A_S to code the label I as the developers are not aware of the existence of the footer f. There is no hardcoding within the electronic control units of the network N as all the existing applications A are not modified in order to take into account the management of the labels I. Furthermore, it permits to save the compatibility with all the communication protocols used between the electronic control units ECU of a network N as the header h is not modified. Thus, it doesn't disturb the communication between different applications A that used different communication protocols. Hence, applications A comprising a footer f comprising the security information si can communicate with other applications that don't use any footer f and any security information si.

As illustrated in figure 5, in a non-limitative embodiment, the footer f further comprises an identification code d1 and a version v1.

The identification code d1 permits to identify the footer f and thus to differentiate it from a header h of another adjacent message Msg. In a non-limitative embodiment, the identification code d1 is coded on 4 bits.

The version v1 permits to define the structure of the security information si of which the length of the label l, the length of the MAC... In a non-limitative embodiment, the version v1 is coded on 4 bits.

In a second non-limitative embodiment, the association of the security information si with the message Msg is performed at the target application side A_T.

Hence, as illustrated in figure 7, when the target application A_T receives a message Msg from a source application A_S, it calls the software component sc1, and the software component sc1 maps the corresponding security information si to the source application A_S (function f2(si, Msg)). The association of the security information si with the message Msg is therefore done. In this case, the corresponding security information si are default security information si0 that comprise a default label l0 defined for all the source applications A_S that has no dedicated security information si. This case is applied when there are no security information si embedded within a message Msg.

**In step E3** illustrated F3(si, Acm) in figure 1, the security information si are forwarded to at least one access control module Acm of one of the two primary and secondary electronic control units ECUA, ECUB via the applicative layers L5 to L7 of at least one of network protocol stack St of one of the two primary and secondary electronic control units ECUA, ECUB in order for said at least one access control module Acm to perform a control of said security information si.

From a technical point of view, this step is executed via a call of the at least one access control module Acm, said call comprising the security information si as parameters when the default security information si0 are not used.

In a non-limitative embodiment, the call is a call of a software component sc2. In a non-limitative embodiment, the software component sc2 is a library. In a non-limitative embodiment, the library is a .dll file referred to .dll2 in the figures 6, 7, 9, 11, 13, 14, and 16. In a non-limitative example, the library .dll2 is a SOME/IP dll. Said call is referred to as the function illustrated f3(si, Acm) in the figures 6, 7, 9, 11, 13, 15, and 17.

It permits to retrieve the security information si from the message Msg (from the header h, or the payload p, or the footer f) and use them as parameters, or to take the default security information si0 as parameters.

The control of the security information si will be performed:
- at the source application side A_S, or
- at the target application side A_T, or
- both at the at the source application side A_S and at the target application side A_T.

As illustrated in the figure 11, when the control of the security information si is performed at the source application side A_S, the access control module Acm is the one of the primary electronic control unit ECUA. Therefore, the security information si are forwarded to the access control module Acm of the primary electronic control unit ECUA. When the control is performed at the source application side A_S, one of the applicative layers L5-L7 of the network protocol stack St calls the access control module Acm in order for the access control module Ac to check if the sending of the message Msg is authorized or forbidden.

If it is authorized, the message Msg is serialized by the network protocol stack St and forwarded to the lower layers L4 to L1 where said message Msg is encapsulated and sent on the automotive network N to the target application A_T.

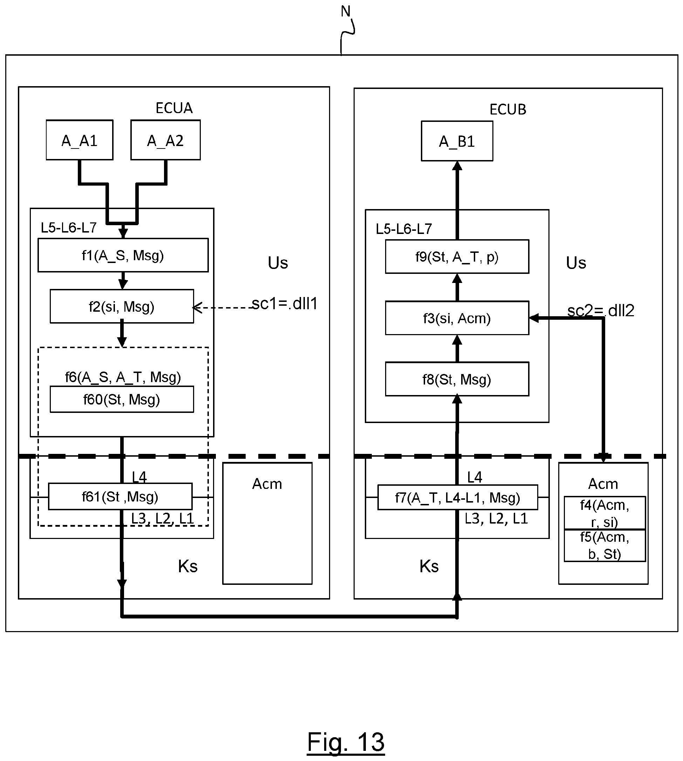

As illustrated in figure 13 and figure 15, when the control of the security information si is performed at the target application side A_T, the access control module Acm is the one of the secondary electronic control unit ECUB. Therefore, the security information si are forwarded to the access control module Acm of the secondary electronic control unit ECUB. When the control is performed at the target application side A_T, when receiving the message Msg, each lower layer L1 to L4 unpacks its protocol then forwards the message Msg to the upper layer. The message Msg is deserialized by the network protocol stack St. One of the applicative layers L5-L7 of network protocol stack St calls the access control module Acm in order for the access control module Ac to check if the receiving of the message Msg is authorized or forbidden. If it is authorized, the payload p is forwarded by the applicative layer L7 to the target application A_T. If not, the message Msg is discarded. The target application A_T is not notified. The source application A_S is not notified as well so that an attacker cannot gain knowledge about the security measures in place in the automotive network.

As illustrated in figure 17, when the control of the security information si is performed at on the source application side A_S and at the target application side A_T, the security information si are forwarded to the access control module Acm of the primary electronic control unit ECUA and to the access control module Acm of the secondary electronic control unit ECUB.

**In step E4** illustrated F4(Acm, r, si) in figure 1, the at least one access control module Acm checks the access rules r mapped to said security information si of said source application A_S.

It checks if the source application A_S is allowed to perform a read or a write or a modify on the data or service of the target application A_T. For the checking, the access control module Acm retrieves from the memory Mem above-mentioned the access rules r corresponding to security information si of the source application A_S. If the default security information si0 are used, the default access rules r0 are retrieved from the memory Mem.

**In step E5** illustrated F5(Acm, b, St) in figure 1, based on said checking, the at least one access control module Acm sends back to the applicative layers L5-L7 that made the call, a security decision b for the message Msg to said applicative layers L5 to L7 of said network protocol stack St. In a non-limitative embodiment, the security decision b is a Boolean. It tells if the message Msg can be authorized or is forbidden.

Hence, the method 1 is carried out by the network N illustrated in figures 2, 9, 11, 13, 15, 17. Said network N comprises a primary electronic control unit ECUA with at least one source application A_S, and a secondary electronic control unit ECUB with at least one target application A_T, said network N being configured to control a transmission of a message Msg from a source application A_S within said primary electronic control unit ECUA to a target application A_T within said secondary electronic control unit ECUB according to a communication protocol P, wherein:
a)- said source application A_S is configured to build a message Msg (function illustrated f1(A_S, Msg)),
(b)- said source application A_S or said target application A_T is configured to associate to said message Msg security information si characterizing said source application A_S (function illustrated f2(si, Msg)),
(c)- at least one of network protocol stack St of one of the two primary and secondary electronic control units ECUA, ECUB via its applicative layers L5-L7 is configured to forward said security information si to at least one access control module Acm of one of the two primary and secondary electronic control units ECUA, ECUB (function illustrated f3(si, Acm)),
(d)- said at least one access control module Acm is configured to:
   - check access rules r mapped to said security information si (function illustrated f4(Acm, r, si)),
   - based on said checking, send back a security decision b for the message Msg to said applicative layers L5-L7 of said at least one network protocol stack St (function illustrated f5(Acm, b, St)).

The source application A_S is further configured to transmit the message Msg to the target application A_T (function illustrated f6(A_S, A_T, Msg)).

The network protocol stack St of the primary electronic control unit ECUA is further configured to:
- serialize the message Msg (function illustrated f60(St, Msg)),
- encapsulate the message Msg (function illustrated f61(St, Msg)).

The network protocol stack St of the secondary electronic control unit ECUB is further configured to:
- desencapsulate the message Msg (function illustrated f7(A_T, L4-L1, Msg)),
- deserialize the message Msg (function illustrated f8(St, Msg)),
- forward the payload p of the message Msg to the target application A_T (function illustrated f9(St, A_T, p)).

The method 1 is described in the following according to two non-limitative embodiments where:
- the source application A_S and the target application A_T are hosted by a same electronic control unit ECU, or
- the source application A_S and the target application A_T are hosted by two different electronic control units ECU.

### First non-limitative embodiment of the method 1

In a first non-limitative embodiment illustrated in figure 9, the primary electronic control unit ECUA that hosts the source application A_S and the secondary electronic control unit ECUB that hosts the target application A_T are a same and unique electronic control unit ECU. Thus, the source application A_S and the target application A_T are within a same electronic control unit ECU. In the non-limitative example of figure 9, the source application A_S is A_A1 and the target application A_T is A_A2. The unique electronic control unit is referred to as ECUA.

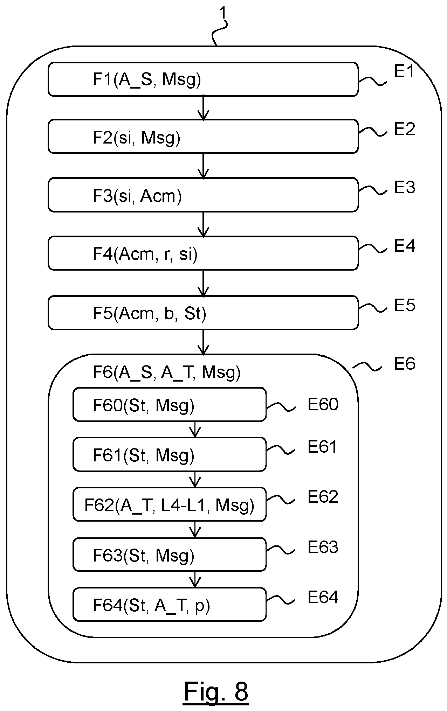

As illustrated in figure 8, according to a first non-limitative embodiment of the method 1, **in step E1** illustrated F1(A_S, Msg) in figure 8, the source application A_A1 through the electronic control unit ECUA builds a message Msg.

**In step E2** illustrated F2(si, Msg) in figure 8, the security information si characterizing the source application A_S are associated to said message Msg. Either they are inserted in the message Msg (in the header h, payload p, or footer f) and comprise a dedicated label I, either they are the default security information si0 and comprise a default label I0.

**In step E3** illustrated F3(si, Acm) in figure 8, the applicative layers L5-L7 of the network protocol stack St forward the security information si to the access control module Acm in order for said access control module Acm to perform a control of said security information si.

**In step E4** illustrated F4(Acm, r, si) in figure 8, the access control module Acm checks the access rules r mapped to said security information si of said message Msg.

**In step E5** illustrated F5(Acm, b, St) in figure 8, based on said checking, the access control module Acm sends back a security decision b for the message Msg to said applicative layers L5-L7 of said network protocol stack St.

Finally, in a non-limitative embodiment, if the security decision b is positive, **in step E6** illustrated F6(A_S, A_T, Msg) in figure 8, the source application A_A1 transmits the message Msg to the target application A_T. To this end, the message Msg is serialized by the applicative layers L5-L7 of the network protocol stack St (**sub-step E60** illustrated F60(St, Msg) and pass through the lower layer L4 where it is encapsulated (**sub-step E61** illustrated F61(St, Msg) and desencapsulated (**sub-step E62** illustrated F62(A_T, L4-L1, Msg)), then is deserialized by the applicative layers L5-L7 of the network protocol stack St (**sub-step E63** illustrated F63(St, Msg), and then the payload p of the message Msg is forwarded by the network protocol stack St to the target application A_T (**sub-step E64** illustrated F64(St, A_T, p)). It is to be noted that in this case, as it is a local communication between two applications A within a same electronic control unit ECUA=ECUB, the message Msg doesn't go through the lower layers L3 to L1.

As illustrated in figure 9, the source application A_A1 is thus configured to:
- build a message Msg (function illustrated f1(A_A1, ECUA, Msg(si)),
- if the security decision b is positive, transmit the message Msg to the target application A_T (function illustrated f6(A_S, A_T, Msg).

The network protocol stack St of the electronic control unit ECUA is configured to:
- associate to said message Msg security information si characterizing the source application A_S (function illustrated f2(si, Msg)),
- forward the security information si through applicative layers L5-L7 to the access control module Acm in order to perform a control of said security information si (function illustrated f3(si, Acm)),
- serialize the message Msg (function illustrated f60(St, Msg)),
- encapsulate the message Msg (function illustrated f61(St, Msg),
- desencapsulate the message Msg (function illustrated f62(A_T, L4-L1, Msg)),
- deserialize the message Msg (function illustrated f8(St, Msg)),
- forward the payload p of the message Msg to the target application A_T (function illustrated f9(St, A_T, p)).

As illustrated in figure 9, the access control module Acm of the electronic control unit ECUA is configured to:
- checks the access rules r mapped to said security information si of said message Msg (function illustrated f4(Acm, r, si)),
- based on said checking, send back a security decision b for the message Msg said applicative layers L5-L7 of said network protocol stack St (function illustrated f5(Acm, b, St)).

The checking of the security information si has been described on the sender side, but it can be performed on the receiver side.

Hence, in a non-limitative variant of said embodiment, the steps E2 to E5 can be performed after the step E63 so that there is only one check of the security information si that is performed after the transmission of the message Msg to the target application A_T.

The checking of the security information si has been described on the sender side, but it can be performed on both sides : on the sender side and on the receiver side.

Hence, in another non-limitative variant of said first embodiment, the steps E2 to E5 can be performed also by the access control module Acm when the target application A_T receives the message Msg so that there are two checks of the security information si, one before the transmission of the message Msg from the source application A_A1 to the target application A_A2, and one after the transmission of the message Msg.

Hence, the checking of the security information si is performed on the sender application side A_A1, or on the receiver application side A_A2, or on both applications side A_A1 and A_A2.

### Second non-limitative embodiment of the method 1

In a second non-limitative embodiment illustrated in figures 11, 13, 15 and 17, the primary electronic control unit ECUA that hosts the source application A_S and the secondary electronic control unit ECUB that hosts the target application A_T are different. Thus, the source application A_S and the target application A_T are within two different electronic control units ECU. They are distinct. The two different electronic control units ECUA and ECUB are illustrated in figures 11, 13, 15 and 17. In the non-limitative example of figures 11, 13, 15 and 17, the source application A_S is A_A1 and the target application A_T is A_B1. The primary electronic control unit is ECUA and the secondary electronic control unit is ECUB.

### First non-limitative variant embodiment of the second non-limitative embodiment

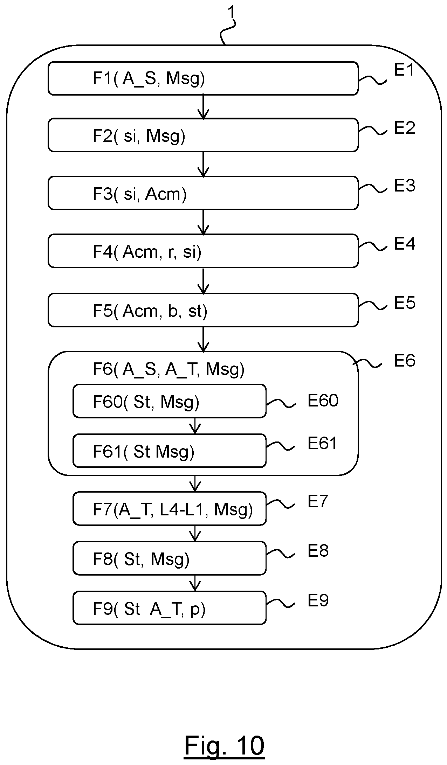

In a first non-limitative variant of embodiment illustrated in figure 10, the control of the security information si of the message Msg is performed at the source application side A_S, here A_A1.

As illustrated in figure 10, **in step E1** illustrated F1(A_S, Msg) in figure 10, the source application A_A1 through the primary electronic control unit ECUA builds a message Msg.

**In step E2** illustrated F2(si, Msg) in figure 10, the security information si characterizing the source application A_S are associated to said message Msg. The association is the embedding of the security information si within the message Msg.

**In step E3** illustrated F3(si, Acm) in figure 10, the applicative layers L5-L7 of the network protocol stack St of the primary electronic control unit ECUA forward the security information si to the access control module Acm of the primary electronic control unit ECUA in order for the access control module Acm to perform a control of said security information si.

**In step E4** illustrated F4(Acm, ri, si) in figure 10, the access control module Acm of the primary electronic control unit ECUA checks the access rules r mapped to said security information si of said message Msg. For the checking, the access control module Acm retrieves from the memory Mem above-mentioned the access rules r corresponding to security information si of the source application A_A1.

**In step E5** illustrated F5(Acm, b, st) in figure 10, based on said checking, the access control module Acm sends back a security decision b for the message Msg to said applicative layers L5-L7 of said network protocol stack St of the primary electronic control unit ECUA.

**In step E6** illustrated F6(A_S, A_T, Msg) in figure 10, finally, in a non-limitative embodiment, if the security decision b is positive, the source application A_A1 transmits the message Msg to the target application A_B1. To this end, in step E60, the message Msg is serialized by the applicative layers L5-L7 of the network protocol stack St of the primary electronic control unit ECUA (**sub-step E60** illustrated F60(St, Msg) and pass through the lower layers L4 to L1 where said message Msg is encapsulated (**sub-step E61** illustrated F61(St, Msg)) and sent on the automotive network N to the target application A_T.

At the target application side, **in step E7** illustrated F7(A_T, L4-L1, Msg) in figure 10, the message Msg is desencapsulated by the layers L1 to L4 of the network protocol stack St of the secondary electronic control unit ECUB. **In step E8** illustrated E8(St, Msg)) in figure 10, the message Msg is deserialized by the applicative layers L5, L6 and L7 of the network protocol stack St of the secondary electronic control unit ECUB.

**In step E9** illustrated F9(St, A_T, p) in figure 10, the payload p of the message Msg is forwarded by the network protocol stack St of the secondary electronic control unit ECUB to the target application A_T.

As illustrated in figure 11, the source application A_A1 is thus configured to:
- build a message Msg (function illustrated f1(A_S,Msg),
- if the security decision b is positive, transmit the message Msg to the target application A_T (function illustrated f6(A_S, A_T, Msg)).

The network protocol stack St of the primary electronic control unit ECUA is configured to:
- associate to said message Msg security information si characterizing the source application A_S (function illustrated f2(si, Msg)),
- forward the security information si through the applicative layers L5, L6 and L7 to the access control module Acm of the primary electronic control unit ECUA (function illustrated f3(si, Acm)),
- serialize the message Msg (function illustrated f60(St, Msg)),
- encapsulate the message Msg (function illustrated f61(St, Msg)),

As illustrated in figure 11, the access control module Acm of the electronic control unit ECUA is configured to:
- checks the access rules r mapped to said security information si of said message Msg (function illustrated f4(Acm, r, si)),
- based on said checking, send back a security decision b for the message Msg to the applicative layers L5-L7 of the network protocol stack St of the primary electronic control unit ECUA (function illustrated f5(Acm, b, St)).

The network protocol stack St of the secondary electronic control unit ECUB is configured to:
- desencapsulate the message Msg (function illustrated f7(A_T, L4-L1, Msg)),
- deserialize the message Msg (function illustrated f8(St, Msg)),
- forward the payload p of the message Msg to the target application A_T (function illustrated f9(St, A_T, p)).

### Second non-limitative variant embodiment of the second non-limitative embodiment

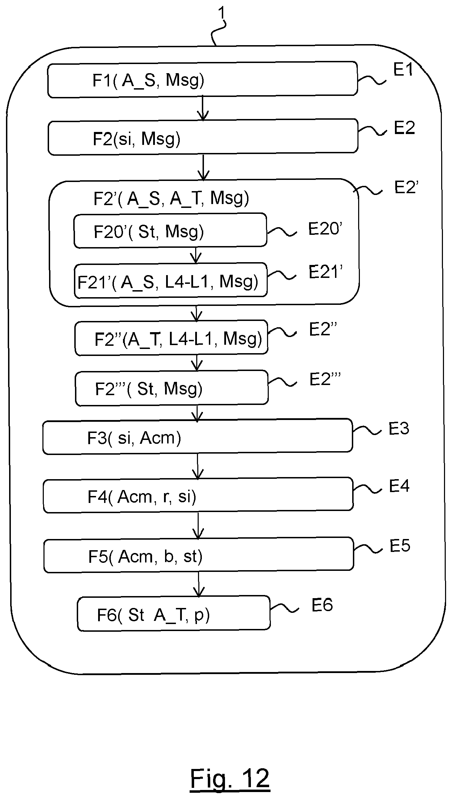

In a second non-limitative variant of embodiment illustrated in figure 12 and figure 14, the control of the security information si of the message Msg is performed at the target application side A_T.

As illustrated in figure 12, the association of the security information si to a message Msg is performed at the source application side A_S. In this case, the association of the security information si with the message Msg is performed before the transmission of the message Msg to the target application A_T.

As illustrated in figure 12, **in step E1** illustrated F1(A_S, Msg) in figure 12, the source application A_A1 through the primary electronic control unit ECUA builds a message Msg.

**In step E2** illustrated F2(si, Msg) in figure 12, the security information si characterizing the source application A_S are associated to said message Msg. The association is the embedding of the security information si within the message Msg.

**In step E2'** illustrated F2'(A_S, A_T, Msg) in figure 12, the source application A_A1 transmits the message Msg to the target application A_T. To this end, **in sub-step E20'** illustrated F20'(St, Msg), the message Msg is serialized by the applicative layers L5-L7 of the network protocol stack St of the primary electronic control unit ECUA and pass through the lower layers L4 to L1 where said message Msg is encapsulated (**sub-step E21'** illustrated F21'(A_S, L4-L1, Msg)) and sent on the automotive network N to the target application A_T.

At the target application side A_T, **in step E2"** illustrated F2"(A_T, L4-L1, Msg) in figure 12, the message Msg is desencapsulated by the layers L1 to L4 of the network protocol stack St of the secondary electronic control unit ECUB and then is deserialized by the applicative layers L5- L7 of the network protocol stack St (**step E2‴** illustrated F2‴(St, Msg) in figure 12).

**In step E3** illustrated F3(si, Acm) in figure 12, the applicative layers L5-L7 of the network protocol stack St of the secondary electronic control unit ECUB forward the security information si to the access control module Acm of the secondary electronic control unit ECUB in order for the access control module Acm to perform a control of said security information si.

**In step E4** illustrated F4(Acm, ri, si) in figure 12, the access control module Acm checks the access rules r mapped to said security information si of said message Msg. For the checking, the access control module Acm retrieves from the memory Mem above-mentioned the access rules r corresponding to security information si of the source application A_S.

**In step E5** illustrated F5(Acm, b, st) in figure 12, based on said checking, the access control module Acm sends back a security decision b for the message Msg to said applicative layers L5-L7 of said network protocol stack St of the secondary electronic control unit ECUB.

**In step E6** illustrated F6(St, A_T, p) in figure 12, finally, in a non-limitative embodiment, if the security decision b is positive, the payload p of the message Msg is forwarded by the network protocol stack St of the secondary electronic control unit ECUB to the target application A_T.

As illustrated in figure 13, the source application A_A1 is thus configured to:
- build a message Msg (function illustrated f1(A_S,Msg),
- transmit the message Msg to the target application A_T (function illustrated f6(A_S, A_T, Msg). The network protocol stack St of the primary electronic control unit ECUA is configured to:
- associate to said message Msg security information si characterizing the source application A_S (function illustrated f2(si, Msg)),
- serialize the message Msg (function illustrated f60(St, Msg)),
- encapsulate the message Msg (function illustrated f61(St, Msg)),

As illustrated in figure 13, the access control module Acm of the secondary electronic control unit ECUB is configured to:
- checks the access rules r mapped to said security information si of said message Msg (function illustrated f4(Acm, r, si)),
- based on said checking, send back a security decision b for the message Msg to said applicative layers L5-L7 of said network protocol stack St (function illustrated f5(Acm, b, St)).

The network protocol stack St of the secondary electronic control unit ECUB is configured to:
- desencapsulate the message Msg (function illustrated f7(A_T, L4-L1, Msg)),
- deserialize the message Msg (function illustrated f8(St, Msg)),
- forward the security information si through the applicative layers L5-L7 to the access control module Acm of the secondary electronic control unit ECUB in order to said access control module Acm to perform a control of said security information si (function illustrated f3(si, Acm)),
- if the security decision b is positive forward the payload p of the message Msg to the target application A_T (function illustrated f9(St, A_T, p)).

As illustrated in figure 14, the association of the security information si to a message Msg is performed at the target application side A_T, here A_B1. In this case, the association of the security information si with the message Msg is performed after the transmission of the message Msg to the target application A_T, here A_B1.

As illustrated in figure 14, **in step E1** illustrated F1(A_S, Msg) in figure 14, the source application A_A1 through the primary electronic control unit ECUA builds a message Msg. There are no security information si embedded within the message Msg.

**In step E2** illustrated F2(A_S, A_T, Msg) in figure 14, the source application A_A1 transmits the message Msg to the target application A_T. To this end, **in sub-step E20** illustrated F20(St, Msg), the message Msg is serialized by the applicative layers L5-L7 of the network protocol stack St of the primary electronic control unit ECUA and pass through the lower layers L4 to L1 where said message Msg is encapsulated (**sub-step E21** illustrated F21(A_S, L4-L1, Msg)) and sent on the automotive network N to the target application A_B1.

At the target application side A_B1, **in step E2'** illustrated F2'(A_T, L4-L1, Msg) in figure 14, the message Msg is desencapsulated by the layers L1 to L4 of the network protocol stack St of the secondary electronic control unit ECUB.

Then, **in step E2"** illustrated F2"(St, Msg) in figure 14, the message Msg is deserialized by the applicative layers L5- L7 of said network protocol stack St.

**In step E2‴** illustrated F2‴(si, Msg) in figure 14, the security information si characterizing the source application A_S are associated to said message Msg. In this case, the security information si are the default security information si0 with the default label l0. The default security information si0 are embedded in the message Msg (in the header h, or in the payload p, or in the footer f). Hence, when embedded in the footer f, the target application A_B1 create a footer f for said message Msg.

**In step E3** illustrated F3(si, Acm) in figure 14, the applicative layers L5-L7 of the network protocol stack St of the secondary electronic control unit ECUB forward the security information si to the access control module Acm of the secondary electronic control unit ECUB in order for the access control module Acm to perform a control of said security information si.

**In step E4** illustrated F4(Acm, ri, si) in figure 14, the access control module Acm checks the access rules r mapped to said security information si of said message Msg. In this case, as the security information si are the default one, the access rules r are the default access rules r0. In a non-limitative embodiment, the default access rules r0 are deny read and write and modify, or deny write and modify but allow read. For the checking, the access control module Acm retrieves from the memory Mem above-mentioned the default access rules r0 corresponding to the default security information si0.

**In step E5** illustrated F5(Acm, b, st) in figure 14, based on said checking, the at least one access control module Acm sends back a security decision b for the message Msg to said applicative layers L5-L7 of said network protocol stack St of the secondary electronic control unit ECUB.

**In step E6** illustrated F6(St, A_T, p) in figure 14, finally, in a non-limitative embodiment, if the security decision b is positive, the payload p of the message Msg is forwarded by the network protocol stack St of the secondary electronic control unit ECUB to the target application A_T.

As illustrated in figure 15, the source application A_A1 is thus configured to:
- build a message Msg (function illustrated f1(A_S,Msg),
- transmit the message Msg to the target application A_T (function illustrated f6(A_S, A_T, Msg). The network protocol stack St of the primary electronic control unit ECUA is configured to:
- serialize the message Msg (function illustrated f60(St, Msg)),
- encapsulate the message Msg (function illustrated f61(St, Msg)),

As illustrated in figure 15, the access control module Acm of the electronic control unit ECUB is configured to:
- checks the access rules r mapped to said security information si of said message Msg (function illustrated f4(Acm, r, si)),
- based on said checking, send back a security decision b for the message Msg to said applicative layers L5-L7 of said network protocol stack St (function illustrated f5(Acm, b, St)).

The network protocol stack St of the secondary electronic control unit ECUB is configured to:
- desencapsulate the message Msg (function illustrated f7(A_T, L4-L1, Msg)),
- deserialize the message Msg (function illustrated f8(St, Msg)),
- associate to said message Msg security information si characterizing the source application A_S (function illustrated f2(si, Msg)),
- forward the security information si through the applicative layers L5- L7 to the access control module Acm of the secondary electronic control unit ECUB in order to said access control module Acm to perform a control of said security information si (function illustrated f3(si, Acm)),
- if the security decision b is positive forward the payload p of the message Msg to the target application A_T (function illustrated f9(St, A_T, p)).

### Third non-limitative variant embodiment of the second non-limitative embodiment

In a third non-limitative variant of embodiment illustrated in figure 16, the control of the security information si of the message Msg is performed on both side : at the source application side A_T (here A_A1) and at the target application side A_S (here A_B1). Hence the steps of figure 10 are applied for the source application side A_S, and the steps of figure 12 are applied for the target application side A_T.

Hence, as illustrated in figure 16:
**In step E1** illustrated F1(A_S, Msg) in figure 16, the source application A_A1 through the primary electronic control unit ECUA builds a message Msg.
**In step E2** illustrated F2(si, Msg) in figure 16, the security information si characterizing the source application A_S are associated to said message Msg. The association is the embedding of the security information si within the message Msg.
**In step E3** illustrated F3(si, Acm) in figure 16, the applicative layers L5-L7 of the network protocol stack St of the primary electronic control unit ECUA forward the security information si to the access control module Acm of the primary electronic control unit ECUA in order for the access control module Acm to perform a control of said security information si.
**In step E4** illustrated F4(Acm, ri, si) in figure 16, the access control module Acm of the primary electronic control unit ECUA checks the access rules r mapped to said security information si of said message Msg. For the checking, the access control module Acm retrieves from the memory Mem above-mentioned the access rules r corresponding to security information si of the source application A_A1.
**In step E5** illustrated F5(Acm, b, st) in figure 16, based on said checking, the at least one access control module Acm sends back a security decision b for the message Msg to said applicative layers L5-L7 of said network protocol stack St of the primary electronic control unit ECUA.
**In step E6** illustrated F6(A_S, A_T, Msg) in figure 16, finally, in a non-limitative embodiment, if the security decision b is positive, the source application A_A1 transmits the message Msg to the target application A_B1. To this end, in step E60, the message Msg is serialized by the applicative layers L5-L7 of the network protocol stack St of the primary electronic control unit ECUA (**sub-step E60** illustrated F60(St, Msg) and pass through the lower layers L4 to L1 where said message Msg is encapsulated (**sub-step E61** illustrated F61(St, Msg)) and sent on the automotive network N to the target application A_T.

At the target application side A_B1, **in step E7** illustrated F7(A_T, L4-L1, Msg) in figure 16, the message Msg is desencapsulated by the layers L1 to L4 of the network protocol stack St of the secondary electronic control unit ECUB.

Then, **in step E8** illustrated F8(St, Msg)) in figure 16, the message Msg is deserialized by the applicative layers L5, L6 and L7 of the network protocol stack St.

**In step E9** illustrated F9(si, Acm) in figure 16, the applicative layers L5-L7 of the network protocol stack St forward the security information si to the access control module Acm of the secondary electronic control unit ECUB in order for the access control module Acm to perform a control of said security information si.

**In step E10** illustrated F10(Acm, ri, si) in figure 16, the access control module Acm checks the access rules r mapped to said security information si of said message Msg. For the checking, the access control module Acm retrieves from the memory Mem above-mentioned the access rules r corresponding to the security information si.

**In step E11** illustrated F11(Acm, b, st) in figure 16, based on said checking, the at least one access control module Acm sends back a security decision b for the message Msg to said applicative layers L5-L7 of said network protocol stack St of the secondary electronic control unit ECUB.

**In step E12** illustrated F12(St, A_T, p) in figure 16, finally, in a non-limitative embodiment, if the security decision b is positive, the payload p of the message Msg is forwarded by the network protocol stack St to the target application A_T.

As illustrated in figure 17, the source application A_A1 is thus configured to:
- build a message Msg (function illustrated f1(A_S,Msg),
- if the security decision b is positive, transmit the message Msg to the target application A_T (function illustrated f6(A_S, A_T, Msg).

The network protocol stack St of the primary electronic control unit ECUA is configured to:
- associate to said message Msg security information si characterizing the source application A_S (function illustrated f2(si, Msg)),
- forward the security information si through applicative layers L5, L6 and L7 to the access control module Acm of the primary electronic control unit ECUA (function illustrated f3(si, Acm)),
- serialize the message Msg (function illustrated f60(St, Msg)),
- encapsulate the message Msg (function illustrated f61(St, Msg)),

As illustrated in figure 17, the access control module Acm of the electronic control unit ECUA is configured to:
- checks the access rules r mapped to said security information si of said message Msg (function illustrated f4(Acm, r, si)),
- based on said checking, send back a security decision b for the message Msg to said applicative layers L5-L7 of said network protocol stack St (function illustrated f5(Acm, b, St)).

As illustrated in figure 17, the access control module Acm of the electronic control unit ECUB is configured to:
- checks the access rules r mapped to said security information si of said message Msg (function illustrated f4(Acm, r, si)),
- based on said checking, send back a security decision b for the message Msg to said applicative layers L5-L7 of said network protocol stack St (function illustrated f5(Acm, b, St)).

The network protocol stack St of the secondary electronic control unit ECUB is configured to:
- desencapsulate the message Msg (function illustrated f7(A_T, L4-L1, Msg)),
- deserialize the message Msg (function illustrated f8(St, Msg)),
- forward the security information si through the applicative layers L5, L6 and L7 to the access control module Acm of the secondary electronic control unit ECUB in order to said access control module Acm to perform a control of said security information si (function illustrated f3(si, Acm)),
- if the security decision b is positive forward the payload p of the message Msg to the target application A_T (function illustrated f9(St, A_T, p)).

It is to be understood that the present invention is not limited to the aforementioned embodiments and variations and modifications may be made without departing from the scope of the invention. All statements herein reciting principles, aspects, and embodiments of the invention, as well as specific examples thereof, are intended to encompass equivalents thereof. Hence, the present invention may be applied to applications other than the vehicle application such as navy, aerospace, IOT, Telecommunication applications etc. Hence, the present invention may be applied to any networks complying with OSI model.

Hence, some embodiments of the invention may comprise one or a plurality of the following advantages:
- it permits to control the transmission of the messages by enforcing access clearance on coming and egress messages of an application and this thanks to the security information associated to a message, and to the checking of the access rules mapped to the security information; consequently, an application A can perform a proper access clearance per incoming message Msg,
- by replacing an authentication solution using authentication keys by a solution using security information si, it reduces memory consumption and reduce CPU computation costs,
- it permits to transport labels I to extend local access control to a distributed architecture,
- it permits to use access control module Acm that is usually used locally within an electronic control unit ECU in a distributed architecture with a plurality of electronic control units ECU ; such access control module Acm permits to control applications A from other electronic control units ECU than the one within which it is embedded,
- it permits to enforce an access clearance on a transmission of a message from an application A at the level of the applicative layers L5 to L7 without impact and without modification of the other lower layers L1 to L4,
- when the security information si are embedded within the footer f, it preserves the standard protocol header h and thus ensures backward compatibility: applications A with a footer f comprising the security information si can communicate with actual applications A with no footer f and no security information si,
- It doesn't need a huge amount of symmetric or asymmetric keys as in the authentication solution of the prior art and therefore there is no need of a complex management of all of symmetric or asymmetric keys, management that is exponential to the number of applications within the automotive network.

## Claims

1. Method (1) for controlling a transmission of a message (Msg) from a source application (A_S) within a primary electronic control unit (ECUA) of a network (N) to a target application (A_T) within a secondary electronic control unit (ECUB) of said network (N) according to a communication protocol (P), said method (1) comprising:
- building (E1) by the source application (A_S) a message (Msg),
- associating (E2) to said message (Msg) security information (si) characterizing said source application (A_S),
- forwarding (E3) said security information (si) to at least one access control module (Acm) of one of the two primary and secondary electronic control units (ECUA, ECUB) via applicative layers (L5-L7) of at least one of network protocol stack (St) of one of the two primary and secondary electronic control units (ECUA, ECUB),
- checking (E4) by said at least one access control module (Acm) access rules (r) mapped to said security information (si),
- based on said checking, sending back (E5) by said access control module (Acm) a security decision (b) for the message (Msg) to said applicative layers (L5-L7) of said at least one network protocol stack (St).

2. Method (1) according to claim 1, wherein said message (Msg) comprises a header (h), a payload (p), and said header (h) comprises the security information (si).

3. Method (1) according to claim 1, wherein said message (Msg) comprises a header (h), a payload (p), and said payload (p) comprises the security information (si).

4. Method (1) according to claim 1, wherein said message (Msg) comprises a header (h), a payload (p) and a footer (f), and said footer (f) comprises the security information (si).

5. Method (1) according to the preceding claim, wherein the footer (f) further comprises an identification code (d1) to identify the footer (f) and a version (v1) to define the security information's (si) structure.

6. Method (1) according to any preceding claims, wherein the association of said security information (si) to said message (Msg) is performed at the source application side (A_S) or at the target application side (A_T).

7. Method (1) according to any preceding claims, wherein the security information (si) comprises a dedicated label (I) or a default label (10).

8. Method (1) according to claim 6 and claim 7, wherein when the association of said security information (si) to said message (Msg) is performed at the target application side (A_T), the security information (si) comprising said default label (l0).

9. Method (1) according to any preceding claims, wherein the security information (si) further comprises a MAC.

10. Method (1) according to any preceding claims, wherein the forwarding of said security information (si) through the applicative layers (L5-L7) of the at least one network protocol stack (St) and all the following steps are performed at the source application side (A_S), and the method further comprises the transmission of said message (Msg) to said target application (A_T) if the security decision (b) is positive.

11. Method (1) according to any preceding claims 1 to 9, wherein the method (1) further comprises the transmission of said message (Msg) to said target application (A_T), and the forwarding of said security information (si) through the applicative layers (L5-L7) of the at least one network protocol stack (St) and all the following steps are performed at the target application side (A_T).

12. Method (1) according to any preceding claims 1 to 9, wherein :
- said method (1) further comprises the transmission of said message (Msg) to said target application (A_T), and
- a forwarding of said security information (si) through the applicative layers (L5-L7) of the network protocol stack (St) of said primary electronic control unit (ECUA) and all the following steps are performed at the source application side (A_S), and
- a forwarding of said security information (si) through the applicative layers (L5-L7) of the network protocol stack (St) of said secondary electronic control unit (ECUB) and all the following steps are performed at the target application side (A_T), and the transmission of the message (Msg) to said target application (A_T) is performed after the forwarding of the security information (si) at the source application side (A_S) and before the forwarding of the security information (si) at the target application side (A_T).

13. Method (1) according to any preceding claims, wherein the network (N) is an automotive network (N).

14. Method (1) according to any preceding claims, wherein the communication protocol (P) is a SOME/IP protocol or DDS protocol.

15. Network (N) for controlling a transmission of a message (Msg) from a source application (A_S) within a primary electronic control unit (ECUA) of a network (N) to a target application (A_T) within a secondary electronic control unit (ECUB) of said network (N) according to a communication protocol (P):
(a)- said source application (A_S) being configured to build a message (Msg),
(b)- said source application (A_S) or said target application (A_T) being configured to associate to said message (Msg) security information (si) characterizing said source application (A_S),
(c)- at least one of network protocol stack (St) of one of the two primary and secondary electronic control units (ECUA, ECUB) via its applicative layers (L5-L7) being configured to forward said security information (si) to at least one access control module (Acm) of one of the two primary and secondary electronic control units (ECUA, ECUB),
(d)- said at least one access control module (Acm) being configured to:
- check access rules (r) mapped to said security information (si),
- based on said checking, send back a security decision (b) for the message (Msg) to said applicative layers (L5-L7) of said at least one network protocol stack (St).
